# EUROPEAN PATENT SPECIFICATION

(11) **EP 3 269 608 B1**
(45) Date of publication and mention of the grant of the patent: **10.11.2021**
(21) Application number: 17176531.6
(22) Date of filing: 19.06.2017
(51) Int. Cl.: B60W 40/04, B60W 40/09

(54) **DETECTION OF TAILGATING SITUATIONS**
ERKENNEN VON AUFFAHRSITUATIONEN
DÉTECTION DE SITUATIONS DE TALONNAGE

(30) Priority: 20.06.2016 GB 201610708
(43) Date of publication of application: 17.01.2018
(73) Proprietor: Trakm8 Ltd, Shaftesbury, Dorset SP7 9QJ (GB)
(72) Inventor: COWLEY, Matthew, Shaftesbury, Dorset SP7 9QJ (GB)
(74) Representative: Script IP Limited

(56) References cited:
- DE-A1- 4 312 717
- DE-A1-102009 010 761
- US-A1- 2004 083 041
- US-A1- 2004 236 475
- US-A1- 2013 244 210
- US-B1- 6 366 207
- US-B1- 7 057 501

## Description

### FIELD OF THE INVENTION

The invention relates to the field of monitoring for tailgating situations where a vehicle is being driven too close to a preceding vehicle. US 2004/0236475, US 2013/0244210, US 2004/0083041 and US 6 366 207 relate to detection of tailgating.

### BACKGROUND

Vehicles increasingly use monitoring devices to monitor parameters associated with the vehicle such as its speed, engine load and location. These can be used in diagnostic procedures both to analyse the expected engine functionality and the driver's behaviour.

The driver's behaviour is an important factor in the likelihood of a collision occurring and being able to monitor for and detect risky behaviour could be used to prevent or at least reduce collisions.

Tailgating for example, is the dangerous practice of driving too close to the vehicle ahead, such that it is not guaranteed that the vehicle can stop in time to avoid a collision. Determining whether a driver is tailgating or not may be very relevant when assessing the likelihood of a collision but it is not easy to detect. The current solution to this problem typically uses vehicle cameras or other range finding devices which calculate the distance to the vehicle ahead. These solutions are expensive because they require expensive sensors and may have high installation costs. Furthermore, they require a clear line of sight with the vehicle ahead which limits their location on a vehicle.

The safe distance for following another vehicle varies with the vehicle speed, weather visibility and other road conditions. UK motoring organisations recommend a minimum time interval of 2 seconds to allow time to react and brake as necessary.

Drivers may tailgate in order to bully the driver ahead. Alternatively non-deliberate tailgating can be due to inexperience or ignorance. Either form is dangerous.

It would be desirable to be able to reliably detect when a driver is tailgating without the use of expensive equipment that require a clear line of sight.

### SUMMARY

A first aspect of the present invention provides a device for detecting vehicle driving characteristics indicative of a tailgating situation, said device comprising:
monitoring circuitry for monitoring at least one signal indicative of at least one of throttle pedal position and brake pedal position;
analysing circuitry operable to determine a frequency of changes in said at least one monitored signal and to generate a signal indicative of said vehicle being in a tailgating situation in response to determining said frequency of changes reaching or exceeding at least one threshold value.

The inventor of the present invention recognised that modern vehicles collect vehicle data during normal operation and that this can be used not only to continually monitor the health of the vehicle but also as an indication of driver behaviour. In this regard the monitoring of driver behaviour can be helpful to alert a driver when his behaviour changes and in particular, to alert him if his behaviour is determined to have an increased risk of collision associated with it. In this regard, one type of behaviour that is recognised as being particularly high risk is where a driver is driving aggressively close to a preceding vehicle, or tailgating. Although such behaviour is known to be high risk its detection has conventionally not been straightforward as generally it has required some optical detection device requiring line of sight with the vehicle ahead. However, the inventor recognised that a tailgating situation could be determined from other data collected which are indicative of the driver's behaviour. In this regard, it was recognised that while tailgating a driver may have to frequently apply the brakes and adjust the throttle in order to maintain their tailgating position without colliding with the vehicle ahead. An analysis of the frequency and amplitude of changes in at least some of this vehicle data such as acceleration, throttle data such as throttle pedal position, brake pedal position, may provide an indication of tailgating.

As many modern vehicles monitor such information the monitoring may be done without requiring any additional sensors, but simply by providing an analysing device able to analyse the relevant data and to determine tailgating situations from such an analysis. The patterns and signature of the data collected will change with driver behaviour and where they indicate typical tailgating behaviour a warning signal is output. Although the analysis to determine tailgating behaviour may be done in a number of ways, the determination that tailgating behaviour has occurred is made in response to some defined threshold being breached.

Detection of such behaviour could be used for a variety of purposes such as to trigger the output of a warning signal which may be used to warn the driver to change his behaviour and thereby reduce the risk of a collision. The detection signal may additionally or alternatively trigger the output of at least some of the monitored data to a remote analyser such that the driver's behaviour can be analysed and his risk assessed and in some cases the threshold values used in the analyser updated to improve the analyser's performance. The output of driver data may be limited to a time period during which a tailgating situation is in progress, alternatively the data may be output for a predetermined time following detection of a tailgating episode. Outputting data only in response to determining that a tailgating episode has occurred allows the amount of data that is transmitted to the remote analyser to be reduced, while still transmitting the most relevant data, allowing the additional processing power of a remote analyser to be used in the analysis of this most relevant data.

In some cases the detection of a tailgating episode may also trigger the collection and transmission of additional data. For example where the vehicle has a camera or other peripheral sensor then data from such devices could be collected and used to verify and quantify the tailgating episode at the remote station. This data could be useful in validating and updating both the algorithms and the threshold values used.

In some embodiments, said monitoring circuitry is operable to monitor said vehicle speed and to output said vehicle speed to said analysing circuitry.

In addition to determining frequency of changes in monitored signals, the vehicle speed at which these changes are occurring is also relevant to whether the vehicle is in a tailgating situation or not and thus in some embodiments, the monitoring circuitry may output the vehicle speed to the analysing circuitry.

In some embodiments, said analysing circuitry is operable to determine said frequency of changes in said at least one monitored signal in response to said vehicle speed exceeding a predetermined speed and not to analyse said frequency of changes when said vehicle speed is less than said predetermined speed.

As noted above, the vehicle speed is relevant to whether the frequency of changes indicate a tailgating situation or not and in particular, where the vehicle speed is less than a certain value, then although a driver may apply the brakes and accelerator often this is not a tailgating situation and thus the analysing circuitry may be configured at low speed, not to analyse the frequency of changes and only when the speed has exceeded or reached a predetermined value will the analysing circuitry start to analyse the changes, as it is only at these higher speeds that a tailgating situation may arise or may become relevant to the risk associated with the driver behaviour.

In some embodiments, said analysing circuitry is operable in response to said signal indicating said vehicle is in said tailgating situation to estimate a severity of said tailgating situation and to output a signal indicative of said estimated severity.

In addition to simply detecting a tailgating situation the analyser may also be operable to determine the estimated severity of this situation by analysis of the rate of change of the parameters monitored. This can be used to determine the action to take, be it to warn the driver, output data to a third party and/or apply the brakes.

In some embodiments, said analysing circuitry is operable in response to said signal indicating said vehicle is in said tailgating situation to estimate a distance of said vehicle from a preceding vehicle in dependence upon said frequency of changes in said at least one monitored signal and to output a signal indicative of said estimated distance.

Once the analysing circuitry has determined that the vehicle is in a tailgating situation, then it may analyse the frequency of changes in the monitored signals to estimate a distance of the vehicle from a preceding vehicle. How close a vehicle is being driven to a preceding vehicle is an indication of the severity of the tailgating situation and it has been recognised that this can be determined from certain monitored signals. Changes in these signals maybe used to estimate distance without the need for a line of sight detector. In this way the severity of the tailgating situation may be indicated by indicating the estimated distance. In this regard it should be noted that a safe distance between vehicles may depend not only on speed but also on the weather and road conditions. Driver behaviour and in particular, frequent changes in throttle and/or braking is an indication that the driver is having to work hard to avoid a collision and as such indicates, perhaps more clearly than actual distance, the severity of the tailgating situation.

In some embodiments, said analysing circuitry is further configured to correlate said estimated distance with said vehicle speed and to output a signal when said estimated distance passes below a threshold value, said threshold value being dependent upon said current speed.

When estimating the distance, the severity of the tailgating situation will depend on the speed and thus the analyser may be configured to output signals when the estimated distance passes below a threshold value, the threshold value being dependent upon the current speed of the vehicle. In this regard, where a vehicle is travelling fast, then it should leave a larger distance between the preceding vehicle and itself than is the case where it is travelling more slowly.

In some embodiments, said analysing circuitry is operable in response to said signal indicating said vehicle is in said tailgating situation to estimate a time to reach a preceding vehicle and to output a signal in response to said estimated time reaching or falling below a threshold value.

Additionally and/or alternatively, the analysing circuitry may analyse the monitored signals to determine a time to reach a preceding vehicle assuming that that vehicle were to suddenly stop. A time to reach a preceding vehicle may be a particularly relevant indication of safe driving which is not as dependent on speed as a "safe" distance is.

In some embodiments, said device comprises an accelerometer, said analyser being operable to determine road noise from signals received from said accelerometer. These signals may be output to a remote analyser, alternatively they may be analysed by the on-board analyser and correlated with said monitored signals and where frequency of changes in a monitored signal correlate with signals from said accelerometer, said correlated signals can be filtered from said monitored signals prior to analysis.

In this regard where a vehicle is moving on a particularly bumpy or cobbled street vibration from the street may cause the driver's foot to vibrate and introduce a signal which could be falsely interpreted as a tailgating episode. Detection of vibrations signals due to such bumps using an accelerometer could be used to cancel or at least reduce this error.

In some embodiments, the device further comprises control circuitry operable to generate a warning signal for activating a warning indicator within said vehicle for warning a driver in response to a signal output by said analysing circuitry.

Although the signal generated in response to a tailgating situation can be used in a number of ways, in some embodiments it is transmitted to control circuitry which will generate a warning signal for activating a warning indicator within the vehicle. In this way, when the analysing circuitry determines the frequency of changes exceed a predetermined threshold value, a warning signal for activating a warning indicator within the vehicle is generated and the driver is automatically warned that he is driving in a tailgating situation and can adjust his behaviour appropriately.

It should be noted that although in this embodiment the signal is output to a warning indicator on the vehicle, in other embodiments it may be transmitted along with at least some of the monitored data to a remote analysing device which will analyse drivers' behaviour.

It should also be noted that although a simple warning signal may be output, in some embodiments the warning signal may comprise additional information such as an indication of how close to the vehicle in front the driver is, or the time to the vehicle ahead, or indeed it may be a gradated warning signal indicating slightly too close, very close, and dangerously close for example. This may be an audio or a visual signal.

In some embodiments, the device further comprises control circuitry operable to generate a brake control signal to automatically apply the brakes in response to a signal output by said analysing circuitry.

Alternatively and/or additionally, the control circuitry may generate a brake control signal such that the brakes are automatically applied. Thus, in addition to or as an alternative to warning the driver, the brakes on the vehicle can be automatically applied where the vehicle is determined to be perhaps dangerously close.

In some embodiments, said device further comprises transmitting circuitry operable to transmit data indicative of at least one of: at least a portion of said signals output by said monitoring circuitry and at least a subset of said signals output by said analysing circuitry towards a remote analysing device.

Although the device maybe a self-contained device which monitors and analyses data and generates signals that can be used to control the brakes or warn the driver within the vehicle, in some embodiments the device can transmit at least some of the information that it collects towards a remote analysing device. Allowing the data to be analysed remotely allows for a more sophisticated analysis of the data and also allows data from different vehicles to be compared. This can be used to improve the analysing algorithms and update threshold values. In this regard, the tailgating situation is determined from an analysis of driver behaviour and as such, further input into any algorithms that determine this may be helpful in improving the algorithm.

Although all of the data determined by the monitoring circuit and/or all of the signals output by the analysing circuitry when a tailgating situation has been determined may be output, in some embodiments the device further comprises classifying circuitry operable to determine at least one of said portion of said signals output by said monitoring circuitry and said subset of said signals output by said analysing circuitry to be transmitted towards said remote analysing device.

In order to reduce the amount of data to be transmitted to the remote analysing device and thereby reduce costs associated with data transmissions, a classifier on board the vehicle may determine which of the data is particularly relevant to the tailgating situation and may control the output of data such that only this data is output. Alternatively, in some embodiments, raw data may be output. This may help a remote analysing device to determine normal driver behaviour but has the disadvantage of higher transmission costs.

In some embodiments, said transmitting circuitry is operable to transmit data via a wireless communication network to said remote analysing device.

In some embodiments, the device further comprises: an interface configured to connect to a diagnostic interface on said vehicle and to receive said signals to be monitored from said diagnostic interface.

Although the device maybe hard-wired into the vehicle, it maybe advantageous if it is a removable device that is configured to connect to a diagnostic interface on the vehicle. This would allow the device to be applied to any vehicle with such an interface without requiring specialist labour.

Although the diagnostic interface may comprise a number of things, it may comprise an on-board diagnostic socket. These are common in modern cars and provide access to many of the signals generated by an engine and allows the monitoring of a lot of data which is relevant to the analysis of tailgating situations. Simply attaching the monitoring device to such a socket allows it to be fitted to a vehicle without the need for a professional fitting service.

In some embodiments, the device further comprises a receiver operable to receive data indicative of said at least one threshold value, said device being operable to update said at least one threshold value in response to said received data.

Where there is a remote analyser analysing data collected from a number of vehicles, this can be used to improve the algorithms used to analyse the tailgating situation and to generate and transmit new threshold values that can be used to determine tailgating situations. Thus, in some embodiments, the device may receive updated threshold values and in this way both the remote analyser and the analyser on the vehicle can be continually improved.

In addition to or as an alternative to receiving updated threshold values, in some embodiments said receiver is further operable to receive a warning indication regarding driver characteristics from a remote analyser device and said device is operable to output a warning signal to a driver in response to said received warning indication.

As noted previously, the remote analyser can be used to determine driver behaviour and in some cases where it determines that driver behaviour is deteriorating, it can transmit a warning signal to the driver indicating this such that the driver is alerted to his deteriorating driving behaviour.

In some embodiments, said analysing circuitry is configured to analyse said at least one signal in both the time domain and frequency domain.

As the analyser is particularly concerned with changes in signal values, it may be advantageous if these are monitored in both the time and frequency domains as both of these domains are relevant to determining rate of change patterns for such signals.

In some embodiments, said at least one threshold value comprises a plurality of boundary thresholds, said analysing circuitry being configured to analyse data from said at least one monitored signal using signal analysis techniques with said plurality of boundary thresholds, said analysed data reaching or passing beyond at least one of said boundary thresholds causing said analysing circuitry to generate a signal indicating a change in driver behaviour state from a normal driving state to a tailgating situation.

Although a single threshold value could be used to determine a tailgating situation, in some embodiments, there are a number of threshold values which may be related to a number of monitored signals and each of them or indeed a combination of some of them can be used as an indication of a tailgating situation. In this way, the analysis of the data can be made to be more sophisticated and can more accurately determine a tailgating situation. For example, it may be that if there are a number of changes of acceleration data within a time window that are combined with a number of changes of brake data, then together these changes exceeding a boundary threshold will indicate a tailgating situation. Alternatively, a different threshold value linked to changes in acceleration on its own could be used to indicate a tailgating situation. As can be understood, a number of different boundary thresholds relating to different signals or different combinations of signals can be used to indicate tailgating situations.

As noted previously, a number of different signals from the engine may be monitored by the monitoring circuitry and used by the analysing circuitry, however, throttle pedal position and brake pedal position used according to the invention are particularly clear indicators of tailgating situations, as they are direct indicators of driver behaviour.

In some embodiments, said analysing circuitry is configured to determine a frequency of changes in said at least one monitored signal by counting a number of changes within a moving time window, said frequency of changes reaching or exceeding said at least one predetermined threshold value, when said counted number of changes within said time window reaches or exceeds said threshold value.

As it is the frequency of changes that is particularly relevant, one way of determining this may be to count a number of changes within a particular time window, the time window that is analysed moving as time progresses. For example, one could count a number of pedal movements within a moving time window and compare this with a threshold, which may be dependent on the speed of the vehicle. When the threshold value is exceeded, a signal is created which indicates a tailgating situation has arisen. There may be further thresholds which when exceeded indicate a higher severity of this tailgating situation.

In some embodiments, said analysing circuitry is operable to further determine a magnitude of said changes in said at least one monitored signal and to generate said output signal in dependence upon both said frequency of said changes in said at least one monitored signal and said magnitude of said changes.

Although the frequency of changes is particularly relevant, the magnitude of the changes is also a factor which is relevant both to whether tailgating is occurring and to the severity of the tailgating. Thus in some cases, the analysing circuitry considers both the magnitude and the frequency of the changes when determining whether or not a tailgating situation has arisen. When determining the magnitude of the signal, this may be determined by, for example, the angle or percentage range of the brake or throttle pedal with this being used as a contributing signal for use by the analysing algorithm.

A second aspect of the present invention provides a method for detecting vehicle driving characteristics indicative of a tailgating situation, said method comprising:
monitoring at least one signal indicative of at least one of throttle pedal position and brake pedal position;
analysing a frequency of changes in said at least one monitored signal; and generating a signal indicative of said vehicle being in a tailgating situation in response to determining said frequency of changes reaching or exceeding at least one threshold value.

In some embodiments, the method comprises monitoring said vehicle speed and only performing said analysing and generating steps in response to said vehicle speed exceeding a predetermined speed.

In some embodiments, the method comprises following determining said vehicle is in said tailgating situation, estimating a distance of said vehicle from a preceding vehicle in dependence upon said frequency of changes in said at least one monitored signal and outputting a signal indicative of said estimated distance.

In some embodiments, the method comprises correlating said estimated distance with said vehicle speed and outputting a signal when said estimated distance passes below a threshold value, said threshold value being dependent upon said vehicle speed.

In some embodiments, the method comprises, following determining said vehicle is in said tailgating situation estimating a time to reach a preceding vehicle and outputting a signal in response to said estimated time reaching or falling below a threshold value.

In some embodiments, the method further comprises generating a warning signal for activating a warning indicator within said vehicle for warning a driver.

In some embodiments, the method further comprises generating a warning signal for transmission via wireless communication to a driver feedback device. The wireless communication may comprise Bluetooth or WiFi.

In some embodiments the driver feedback device is a driver's mobile phone or tablet device, while in others it maybe a device on the vehicle dashboard that it transmits to using a connected car API (application programming interface) for example.

In some embodiments, the method comprises generating a brake control signal to automatically apply the brakes.

In some embodiments, the method comprises transmitting data indicative of at least one of: at least a portion of said monitored signals and at least a subset of said signals generated in response to said analysing step towards an analysing device that is remote from said vehicle.

In some embodiments, the method comprises classifying said monitored and generated signals and determining at least one of said portion of said monitored signals and said subset of said analysed signals to be transmitted towards said remote analysing device.

In some embodiments, the transmitting step comprises transmitting data via a wireless communication network to said remote analysing device.

In some embodiments, the method comprises receiving data indicative of said at least one threshold value, and updating said at least one threshold value in response to said received data.

In some embodiments, the method comprises receiving a warning indication regarding driver characteristics from a remote analyser device and outputting a warning signal to a driver in response to said received warning indication.

In some embodiments, said analysing step analyses said at least one signal in both the time domain and frequency domain.

In some embodiments, said at least one threshold value comprises a plurality of boundary thresholds, said analysing step analysing data from said at least one monitored signal using signal analysis techniques with said plurality of boundary thresholds, said analysed data reaching or passing beyond at least one of said boundary thresholds causing generation of a signal indicating a change in driver behaviour state from a normal driving state to a tailgating situation.

In some embodiments, said analysing step determines a frequency of changes in said at least one monitored signal by determining a frequency of changes within a moving time window, said frequency of changes reaching or exceeding said at least one threshold value, when said determined frequency of changes within said time window reaches or exceeds said threshold value.

It should be noted that determining the frequency of changes can be done by simply counting a number of changes above a certain magnitude in a set time window. Alternatively the signal could be analysed in a more complex manner and some property of the processed signal such as the kurtosis or standard deviation could be linked to frequency of changes and this passing a threshold within a time window may be used to indicate tailgating. Alternatively signal processing and filters could be used to determine where thresholds are exceeded.

In some embodiments, said analysing step further determines a magnitude of said changes in said at least one monitored signal and generates said output signal in dependence upon both said frequency of said changes in said at least one monitored signal and said magnitude of said changes.

A third aspect of the present invention provides a computer program which when executed by a computer is operable to control said computer to perform a method according to a second aspect of the present invention.

A fourth aspect of the present invention provides a method of analysing data received from a plurality of vehicles, said data being indicative of at least one of throttle pedal position and brake pedal positon, said method comprising:
for each vehicle analysing said at least one of throttle pedal position and brake pedal positon and determining when a frequency of changes in said at least one of said throttle pedal position and brake pedal position reaches or exceeds at least one threshold value; and
in response to said analysing step determining said at least one threshold value being reached or exceeded outputting information indicating that said vehicle has been detected as being in a tailgating situation.

Aremote analyser may be used to analyse data from multiple vehicles. This allows the analyser to be more powerful not being limited in size in the same way that it would were it mounted on a vehicle. Also it can analyse data from multiple vehicles allowing it to improve the analysis through learning techniques.

On detecting a tailgating situation the remote analyser can analyse the data from that vehicle in more detail, and/or it can output data to the vehicle to indicate tailgating is detected and/or it may store the data indicative of the driver behaviour for later output either to the driver or to a third party. Outputting the data to the driver may be done by sending it back to the vehicle perhaps to illuminate a warning light. Alternatively it may be transmitted to the driver in another way, perhaps via a wireless network to his phone where an app will display information to the driver regarding his analysed behaviour, allowing him to be aware and perhaps modify this behaviour in the future.

The severity of the tailgating can be measured by looking at the range of values that are over the threshold. This can be normalised for a population of vehicles as part of a training phase where the algorithm is trained to recognise known tailgating situations and thresholds may be updated. Techniques such as machine learning can be used to determine the most effective way to combine the signals using either supervised learning or un-supervised learning techniques.

In some embodiments, said analysing step analyses said received data in dependence upon both said frequency of changes in a monitored value and an amount of said change in said value and generates a signal indicative of a degree of severity of said tailgating situation.

In some embodiments, said analysing step estimates at least one of a distance of said vehicle from a preceding vehicle and a time to collision with a preceding vehicle in dependence upon said received data and generates a signal indicative of said at least one estimated distance and time to collision.

In some embodiments, said data received from said plurality of vehicles further comprises data indicative of a speed of said vehicle, said analysing step including said data in an assessment of said severity of said tailgating situation.

In some embodiments, said analysing step includes a comparing step for comparing data received from multiple vehicles, said method further comprising:
generating updated threshold values for distinguishing between normal driving situations and tailgating situations; and outputting said updated threshold values to at least one of said plurality of vehicles.

As noted previously the collection of data from multiple vehicles allows the analyser to learn from the data and update the threshold values that it uses and that are used by the analysing device on the vehicle. In this way this device's analysis is also improved. In some cases the remote analyser may receive data from some vehicles that have distance sensors such as front mounted cameras. In such a case a correlation between distance estimated from the data relating to driver behaviour, such as that collected from the throttle and brake for example, can be compared to that collected from the camera and the algorithms and thresholds updated where discrepancies are detected.

In some embodiments, said data received from said plurality of vehicles further comprises data from at least one forward sensing device on at least one of said vehicles, said analysing step comprises comparing said data from said at least one forward sensing device with said analysed data to determine an accuracy of at least one of said threshold values and an analysing method and where said accuracy is less than a predetermined value updating at least one of said threshold values and said analysing method.

In some cases vehicles may have forward sensing devices mounted on them, and where this is the case data collected from such devices can be used to validate the analysing models and/or thresholds used. In this way forward mounting sensors are not required on the majority of vehicles but where they are present data collected from them can be used as part of the learning algorithms to improve either or both of the threshold values used and the models used.

In some embodiments, said data received from said plurality of vehicles further comprises data from an accelerometer mounted on said vehicle, said method comprising for each vehicle correlating said frequency of changes in said monitored signal with signals from said accelerometer, and filtering said correlated signals from said monitored signals prior to determining if said threshold value has been breached.

False positives maybe generated from extraneous signals which interfere with measured signals. Collecting signals from an accelerometer for example, may help detect bumpy roads which could lead to additional changes being detected in brake or throttle position which are not due to the driver deliberately altering the position but are rather due to the road irregularities. Detecting such signals allows processing to be performed which removes them from the analysed signals increasing the accuracy of the analysis.

In some embodiments, said outputting step comprises transmitting via a wireless communication network to a destination.

A fifth aspect of the present invention provides a computer program which when executed by a computer is operable to control said computer to perform steps in a method according to a fourth aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a flow diagram illustrating steps performed at a device for detecting a tailgating situation mounted on a vehicle according to an embodiment;
Figure 2 shows a flow diagram illustrating steps performed at a remote analyser for detecting tailgating situations according to an embodiment;
Figure 3 schematically shows a tailgating detector device and remote analyser according to an embodiment;
Figure 4 shows a tailgating detector device according to an embodiment;
Figures 5a and 5b show data from a vehicle being driven with a gap of more than 2 seconds to the vehicle ahead;
Figures 6a and 6b show data from a vehicle being driven in a tailgating situation with a gap of more than 1 second but less than 2 seconds to the vehicle ahead; and
Figures 7a and 7b show data from a vehicle being driven with a gap of less than 1 second to the vehicle ahead.

### DESCRIPTION OF THE EMBODIMENTS

A system for automatically detecting vehicle tailgating using accelerometer, rpm, speed, engine load, throttle and vehicle brake data is proposed. Tailgating episodes are detected by analysing the vehicle signals such as accelerometer, rpm, speed, engine load, throttle, brake data and where certain behaviour is detected recording this as a tailgating event. The invention as defined by the claims relies on the frequency of changes in at least one of throttle pedal position and brake pedal position.

This information is use to provide (a) direct driver feedback (b) data transmitted to a host server for scoring and analytics and for improving the analysis and tailgating detection algorithms. The tailgating data can be used for driver training purposes, to reduce the risk of collisions and may also be used as part of insurance risk analysis.

Frequent use of the throttle and/or brake is typical behaviour of a tailgating driver and occurs in order to maintain a close following or tailgating position. A driver who leaves 2 or more seconds between their vehicle and the vehicle ahead is typically much more relaxed than a driver who is following within 1-second of the vehicle ahead. The frequency of fine adjustments of throttle pedal position and brake pedal position increases inversely proportional to the distance when under 2-seconds and as such can be used to indicate tailgating without the requirement to detect a position of the vehicle ahead. This is because a driver who is aggressively tailgating has to frequently apply the brakes, and adjust the throttle in order to maintain their tailgating position without colliding with the vehicle ahead. Through analysis of the frequency and in some cases amplitude of the vehicle data which includes (brake, throttle, speed, rpm, engine load, accelerometer, gyro and any other CANbus data or independent sensors) tailgating can be detected. In some cases embodiments analyse the signature of this data to identify episodes of tailgating.

In addition to detecting tailgating, embodiments warn the driver through visual or audio means that he/ she is driving dangerously close to the vehicle ahead, which is known as tailgating.

A monitoring device may be fitted to a vehicle either permanently installed or plugged in via some interface such as the OBD J 1939 socket. This allows the vehicle driving characteristics to be monitored from on-board sensors such as accelerometer, gyros and vehicle derived data as read from the vehicle's own instruments through the vehicle network such as the CANbus or from any other vehicle network. These signals may be analysed and classified using an algorithm which maybe on board or off board at a remote host for the purposes of detecting episodes of driver tailgating.

In this regard where they are detected on-board, details of these episodes of tailgating can be transmitted to a remote host system for reporting and measurement purposes. This allows for a host side algorithm to calculate and normalise the tailgating data through additional algorithms and the use of machine learning techniques to discover and identify those drivers most at risk compared to the average driver who only occasionally tailgates. Using statistical methods within a host server can provide for an improved overall system, where a feedback loop is provided within the system to allow the host to analyse and update thresholds which differentiate between normal and aggressive behaviour. These can then be transmitted back to the monitoring device by way of a wireless network. While it is possible for the algorithm to be entirely hosted on a remote analysing device, the implication of this is that a relatively large amount of low level sensor data will need to be transmitted to the host. In addition any driver feedback may be delayed as the calculation is done on the server and response will need to be transmitted back to the driver which in today's mobile networks would create delay and the effectiveness of the driver feedback would be reduced. For practical purposes the algorithm is split between the device where high resolution (greater than 1Hz) data can be analysed in real-time, episodes of tailgating can be detected immediately and the driver informed. On a non-real time basis this data is collected and transmitted to the host server which measures the performance of the algorithm against the average driver. As the host system learns better threshold values to distinguish between normal and aggressive driving it will automatically or with the help of a data scientist create new threshold values which will in turn be transmitted back to the monitoring device.

Unlike many other tailgating solutions or solutions for measuring vehicle distance this proposal does not require line of sight to the vehicle ahead. This is significant because it significantly reduces the cost of installation and even allows for a self-install device. Laser range finders for example, use relatively expensive components and they are expensive to install; camera based systems may use cheaper components but they require fitting within the field of view. This invention uses very low cost components requiring at minimum just a CPU and CANbus interface; it does not require field of view and so can be installed in almost any location within the vehicle; installation can be as simple as a plug-in if using the OBD diagnostics socket.

In one embodiment the distance to the vehicle ahead is estimated by creating a proxy for distance based on driver behaviour. Mathematical techniques are used to analyse braking, accelerating and/ or physical forces within the vehicle as detected by the device or interpreted from the CANbus in the frequency and time domain. Features from these raw signals are extracted and compared against known thresholds which are combined to create a proxy for distance. Since the closer a driver is driving to the car ahead the more driver 'input' is required to control the vehicle without crashing and these resulting signals are proportional to distance to the vehicle ahead.

A time to collision, and time between vehicles, may also be estimated by creating a proxy for distance based on driver behaviour and additionally using speed derived either from a GPS receiver or directly from the vehicles network such as the CANbus for example.

Speed either from GPS or from the vehicle CANbus or any other speed sensor can be used to provide a threshold value to avoid false positives for dangerous tailgating while the driver is in slow moving traffic. The measure of threat or danger from tailgating is also proportional to the vehicles speed. So if the tailgating behaviour 'signal' is detected from the throttle use or brake use at low speeds the speed can be used to detect that the vehicle is in slow moving traffic as opposed to just driving slowly. Alternatively, the speed can be used to impede analysis of data at slow speeds and avoid false positives in this way.

The measurement of throttle position and brake usage can be used as a proxy for measuring driver demand upon the vehicle since the driver has direct control of this. Other metrics looks at the response of the vehicle (such as acceleration), which can be somewhat filtered and delayed by the performance limitations and mass of the vehicle. By measuring throttle and brake pedal position the system can create a proxy for driver's attitude and since an aggressive driver is more likely to have an accident this can be used as a measure of risk.

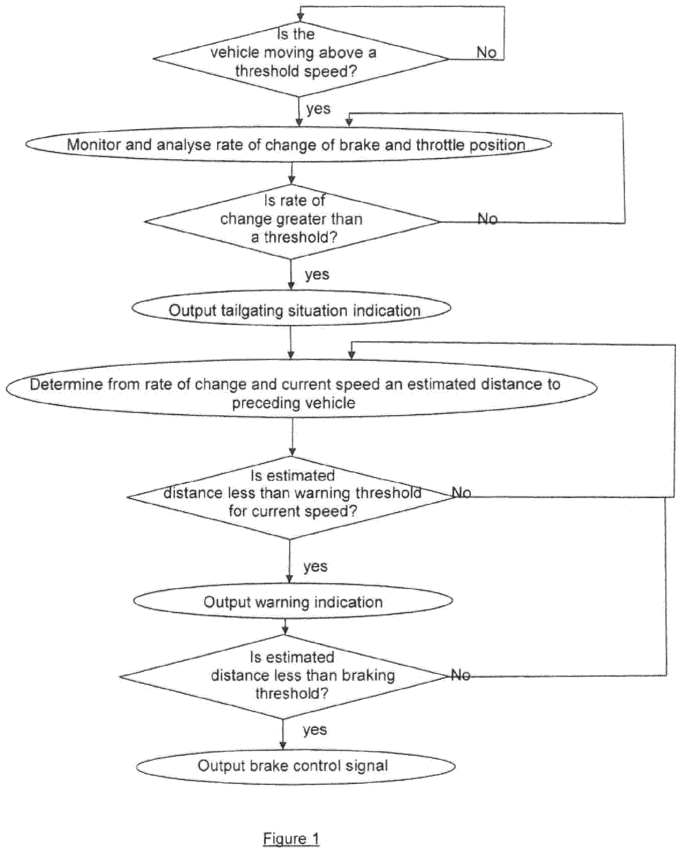

Figure 1 schematically shows a flow diagram illustrating steps performed in a method for detecting a tailgating situation in a vehicle. Initially a step of determining whether the vehicle is moving above a particular threshold speed is performed and only if it is moving faster than the threshold will the steps of analysing the vehicle's characteristics be started. Once the vehicle has been detected moving above the threshold speed, then the rate of change of brake and throttle position that are monitored are compared to threshold values. In this regard, the analysis may be of both the brake and the throttle position and there may be several thresholds that they are compared against. Thus, there may be a threshold for rate of change of brake position, a threshold for rate of change of throttle and another threshold for rate of change of both. If any of these thresholds are exceeded then this is taken to be indicative of a tailgating situation and a tailgating situation indication is output.

Once a tailgating situation has been determined the signals are analysed to determine an estimated distance to a preceding vehicle. This distance is then compared to a threshold value which is speed dependent and when it is exceeded a warning signal is output and this maybe transmitted to an indicator on the vehicle such that the driver is warned that he is in a dangerous tailgating situation. This warning signal may indicate simply that a tailgating situation is occurring or it may indicate the severity of the tailgating situation with perhaps an amber through to a red indication light. Alternatively, it may indicate information such as the distance to the vehicle ahead or the time to an expected collision.

In some cases, in addition to outputting a warning indication, the device may be configured to output braking control signals where the tailgating situation is judged to be very severe. In this case, in addition to the threshold values relevant to particular speeds that when exceeded trigger the generation of a warning signal, there may be additional more severe thresholds which when exceeded will cause the device to output a brake control signal, such that the brakes of the vehicle are then applied automatically.

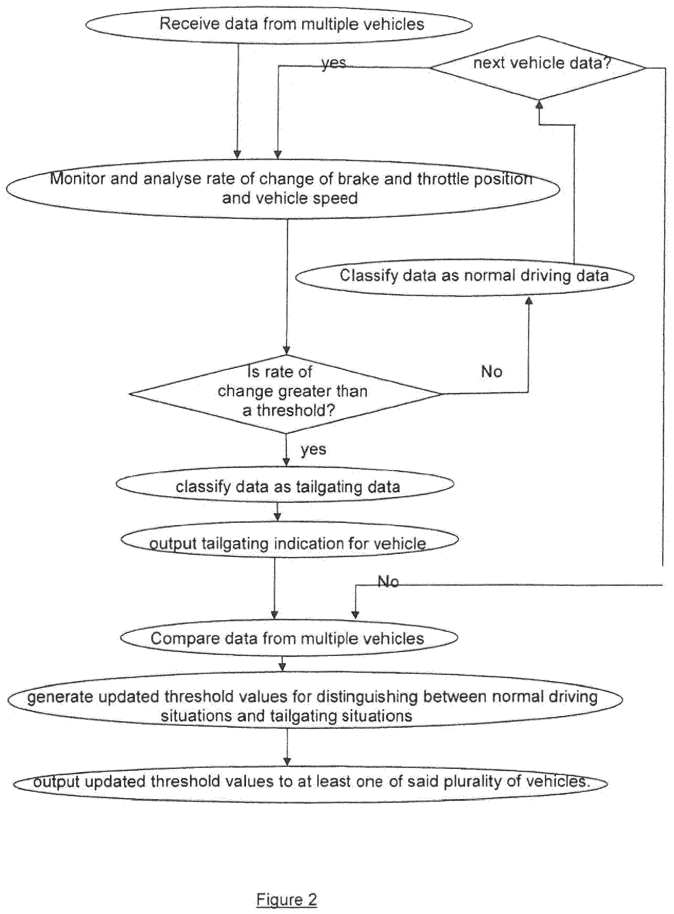

Figure 2 shows a flow diagram illustrating steps of a method performed at a remote analysing device configured to receive data from multiple vehicles. The remote analysing device may have the form of a server and is programmed to analyse the data received from multiple vehicles and in particular the rate of changes in for example, throttle or brake positions and from this to determine tailgating situations. In this regard where these parameters change very frequently this may be an indication of a tailgating situation and in response to the rate of change in these values passing threshold values tailgating is indicated and an indication signal is generated. This indication signal may be used to simply classify the data as tailgating data or normal driving data, or it may be used to trigger a warning to the driver or as an input that is used to classify the driver behaviour, this classification may later be output to the driver perhaps to an app on his mobile phone or to a third party.

Once tailgating has been detected further analysis of changes in the received data may be performed to determine a severity of the tailgating, perhaps by estimating a distance to a preceding vehicle and/or a time to reach the preceding vehicle. Indications can be output indicating this severity and these maybe transmitted to the driver of the vehicle or to a remote analyser and/or third party.

Where these parameters do not change rapidly then this is indicative of normal driving behaviour and this behaviour may also be classified and can be used to improve the analysis using machine learning techniques for example. In this regard, where normal driver behaviour is indicated and then a sudden change in behaviour such as sudden braking occurs, then this may be indicative that perhaps the driver was not in a normal driving situation but was driving close to the preceding vehicle. Where this is detected then the data classified as normal driving data collected preceding the change in behaviour can be analysed and perhaps used to update threshold values. Similarly where data for tailgating situations shows little change in the rate of change in braking and acceleration and the magnitude of such changes is also small, this could be reassessed as normal driving behaviour particularly where it is detected in multiple vehicles and the thresholds changed accordingly.

In some cases in addition to data indicative of brake, throttle and speed of a vehicle, some vehicles may be fitted with additional sensors such as a forward looking camera. Where such a sensor is fitted data from the sensor indicating the distance to a preceding vehicle can be collected and correlated with data analysed from for example, brake and throttle position. Where there are significant discrepancies between the distance estimated from the brake and throttle data and that from the camera sensor then the algorithm used to estimate the distance from the brake and throttle data can be updated. Similarly threshold values used to determine tailgating can also be updated from this comparison and updated threshold values can be transmitted to the vehicles from which data was received.

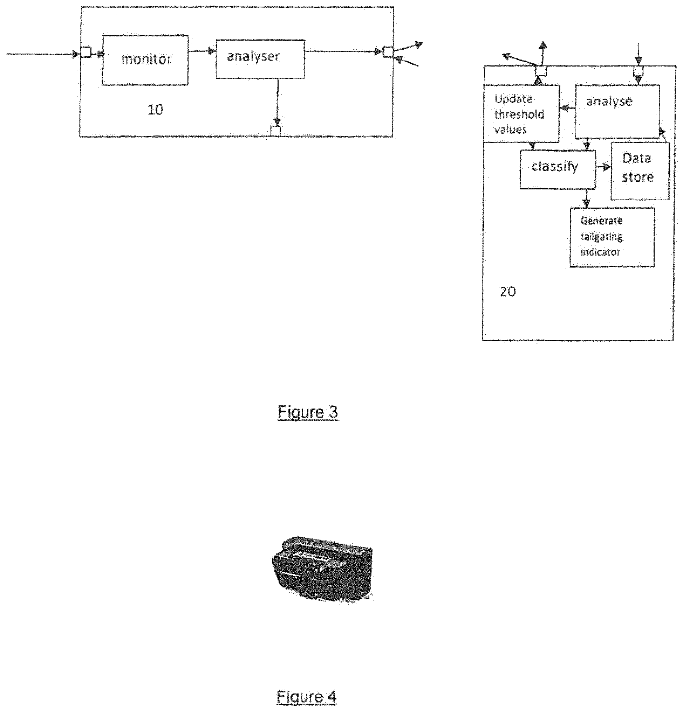

Figure 3 schematically shows a device 10 for analysing signals received from a vehicle to determine a tailgating situation and a remote analyser 20 for receiving such signals from multiple vehicles.

Device 10 is an analysing device that is mounted in the vehicle by fitting it into an OBD diagnostic connector which receives data from the vehicle CANbus. The analysing device 10 analyses a subset of this data and interprets the patterns and signature of the data and where they indicate typical tailgating behaviour a warning signal is output. In this regard the pattern matching may simply comprise comparing rates of changes in throttle and braking behaviour with threshold values which are speed dependent. Where these threshold values are exceeded this indicates rapid changes in acceleration and/or braking indicating a driver needing to react quickly to changes ahead indicating he is driving very close to a preceding vehicle.

The device 10 has two outputs in this embodiment, one comprises a wireless transceiver which can transmit to a remote analysing device 20 and the other is an output to control circuitry within the vehicle which may activate a warning indicator or apply the brakes. In some embodiments the wireless transceiver may also be operable to output a local wireless signal using WiFi or Bluetooth for example and this allows it to communicate signals to devices within the vehicle such as a driver's phone or tablet, or to devices on the dashboard which communicate via such a wireless system. Thus, warning signals indicative of tailgating episodes may be transmitted to the driver in this manner.

Although not shown in Figure 3, the device 10 may also comprise an accelerometer for measuring accelerations experienced by the vehicle. These may be analysed in conjunction with the collected data at the analyser and used to eliminate or at least reduce signals that are due to vibrations of the car rather than a driver moving a throttle or brake pedal deliberately. Alternatively the data from the accelerometer may be transmitted to the remote analyser and the remote analyser may deduct these signals from the analysed signals. In this regard the frequency of accelerations detected at the accelerometer can be correlated with the frequency of changes in the brake and throttle position and theses signals can be filtered from the final analysis of the signal.

Such a device 10 can be used to send data for driver behaviour monitoring at a remote station 20 and/or for immediate driver feedback perhaps as part of an Advanced Driver Assist System (ADAS).

The wireless output may simply output signals indicative of tailgating situations, or it may output much of the data that is monitored.

Remote analysing device 20 receives the data from multiple vehicles and analyses the received data. This analysis may involve determining from the data whether it relates to a tailgating situation or to normal driving behaviour. The data may be classified according to the analysis and may be stored in a data store. Where tailgating is indicated a tailgating indicator may be generated and this may be output either to a third party or back to the vehicle from which the data was received and the tailgating situation maybe indicated to the driver.

The data from multiple vehicles may be analysed and the algorithm used and threshold values may be updated using learning techniques. In this regard some data may be received from vehicles with forward sensing devices such that tailgating situations determined by the algorithms may be correlated with the forward sensing data and where there are discrepancies the algorithms and/or threshold values maybe updated. Updated threshold values for use on the devices on the vehicles may also be determined and transmitted to the vehicles.

Figure 4 shows an example of an analysing device which maybe plugged directly in to the J 1962 OBD vehicle diagnostic connector. This has the advantage of allowing post manufacture fitting of such devices as a simple and inexpensive process.

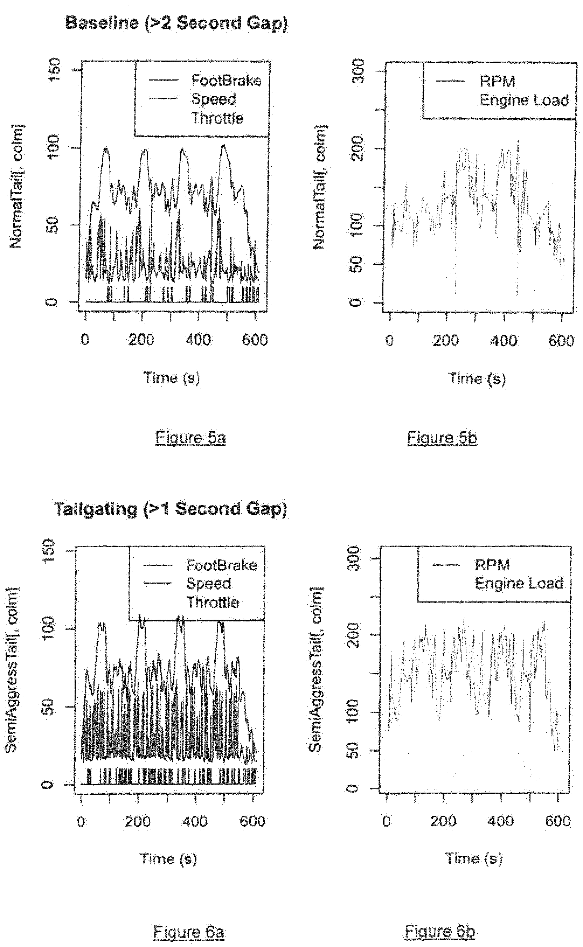

Figures 5a shows baseline data pattern for the throttle, brake and speed, and Figure 5b for the engine load and RPM for normal driving behaviour. Normal driving behaviour is considered to be where a time interval of at least 2-seconds is left to the vehicle ahead. Using time as a measure of distance between vehicles is convenient because it allows for the distance to vary at different speeds and ensures the focus is on the driver's ability to manage the tailgating episode as a human factor rather than being concerned with vehicle performance

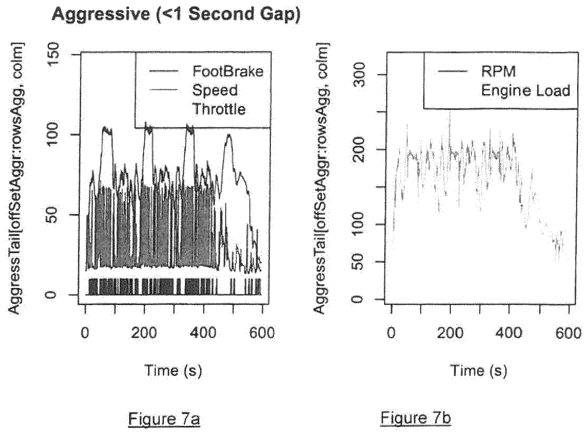

The Baseline diagram shows typical driving behaviour at various speeds for a 10 minute period. This becomes interesting when you compare this against tailgating data for the same track, driver, speed and period where the only difference is the distance between the vehicle ahead. Thus, Figures 6a, 6b and 7a, 7b show the same baseline diagrams for different severity of tailgating. In each of Figures 5a, 6a and 7a, the upper line is the speed, the middle line is the throttle and the lower line is the footbrake.

Figure 6a and 6b show this data for tailgating where there is a 1 second gap with the car ahead and 7a and 7b show this data for severe or aggressive tailgating where the gap is less than 1 second. Note that as the gap decreases the frequency of driver input appears to increase and throttle and foot brake data in particular, show marked obvious visual differences.

From an analysis of such data patterns, thresholds can be devised which when passed indicate tailgating situations. Similarly, from such data analysis a gap between the vehicles either measured in distance or time can be estimated. Thus, these diagrams show clearly that such data can be used to indicate tailgating situations in an accurate manner.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

## Claims

1. A device (10) for detecting vehicle driving characteristics indicative of a tailgating situation, said device comprising:
monitoring circuitry for monitoring at least one signal indicative of at least one of throttle pedal position and brake pedal position;
analysing circuitry operable to determine a frequency of changes in said at least one monitored signal and to generate a signal indicative of said vehicle being in a tailgating situation in response to determining said frequency of changes reaching or exceeding at least one threshold value.

2. A device according to claim 1, wherein said monitoring circuitry is operable to monitor said vehicle speed and to output said vehicle speed to said analysing circuitry.

3. A device according to claim 2, wherein said analysing circuitry is operable to determine said frequency of changes in said at least one monitored signal in response to said vehicle speed exceeding a predetermined speed and not to analyse said frequency of changes when said vehicle speed is less than said predetermined speed.

4. A device according to any preceding claim, wherein said analysing circuitry is operable in response to said signal indicating said vehicle is in said tailgating situation to estimate a severity of said tailgating situation and to output a signal indicative of said estimated severity.

5. A device according claim 4, wherein said analysing circuitry is operable to estimate at least one of a distance of said vehicle from a preceding vehicle and a time to reach said preceding vehicle in dependence upon said frequency of changes in said at least one monitored signal and to output a signal indicative of said at least one estimated distance and time to collision.

6. A device according to claim 5 when dependent on claim 2, wherein said analysing circuitry is further configured to correlate said estimated distance with said vehicle speed and to output a signal when said estimated distance passes below a threshold value, said threshold value being dependent upon said current speed.

7. A device according to any preceding claim, further comprising control circuitry operable to generate a warning signal for activating a warning indicator within said vehicle for warning a driver in response to one of a signal output by said analysing circuitry and a signal received at a receiver from a remote analyser device.

8. A device according to any preceding claim, said device comprising transmitting circuitry operable to transmit via wireless communication a warning indicator to a driver feedback device in response to a signal output by said analysing circuitry.

9. A device according to any preceding claim, further comprising control circuitry operable to generate a brake control signal to automatically apply the brakes in response to a signal output by said analysing circuitry.

10. A device according to any preceding claim, wherein said device further comprises transmitting circuitry operable to transmit data indicative of at least one of: at least a portion of said signals output by said monitoring circuitry and at least a subset of said signals output by said analysing circuitry towards a remote analysing device (20) that is remote from said vehicle.

11. A device according to claim 10, said device being configured in response to said signal generated by said analysing circuitry indicating said vehicle is in said tailgating situation to collect data from forward sensing devices mounted on said vehicle, said transmitting circuitry being operable to transmit said data collected from said forward sensing devices to said remote analysing device.

12. A device according to any preceding claim, said device further comprising:
an interface configured to connect to a diagnostic interface on said vehicle and to receive said signals to be monitored from said diagnostic interface.

13. A method for detecting vehicle driving characteristics indicative of a tailgating situation, said method comprising:
monitoring at least one signal indicative of at least one of throttle pedal position and brake pedal position;
analysing a frequency of changes in said at least one monitored signal; and
generating a signal indicative of said vehicle being in a tailgating situation in response to determining said frequency of changes reaching or exceeding at least one threshold value.

14. A method of analysing data received from a plurality of vehicles, said data being indicative of at least one of throttle pedal position and brake pedal positon, said method comprising:
for each vehicle analysing said at least one of throttle pedal position and brake pedal positon and determining when a frequency of changes in said at least one of said throttle pedal position and brake pedal position reaches or exceeds at least one threshold value; and
in response to said analysing step determining said at least one threshold value being reached or exceeded outputting information indicating that said vehicle has been detected as being in a tailgating situation.

15. A computer program which when executed by a computer is operable to control said computer to perform a method according to claims 13 or 14.

## Patentansprüche

1. Vorrichtung (10) zum Erkennen von Fahrzeugfahreigenschaften, welche eine Auffahrsituation anzeigen, wobei die Vorrichtung umfasst:
Überwachungsschaltkreise zum Überwachen zumindest eines Signals, welches zumindest eines von Gaspedalposition und Bremspedalposition anzeigt;
Analyseschaltkreise, welche in der Lage sind, eine Häufigkeit von Änderungen in dem zumindest einen überwachten Signal zu bestimmen und ein Signal zu erzeugen, welches anzeigt, dass das Fahrzeug sich in einer Auffahrsituation befindet, als Reaktion darauf, dass das Bestimmen der Häufigkeit von Änderungen zumindest einen Schwellenwert erreicht oder überschreitet.

2. Vorrichtung nach Anspruch 1, wobei die Überwachungsschaltkreise in der Lage sind, die Fahrzeuggeschwindigkeit zu überwachen und die Fahrzeuggeschwindigkeit an die Analyseschaltkreise auszugeben.

3. Vorrichtung nach Anspruch 2, wobei die Analyseschaltkreise in der Lage sind, die Häufigkeit von Änderungen in dem zumindest einen überwachten Signal als Reaktion darauf zu bestimmen, dass die Fahrzeuggeschwindigkeit eine vorbestimmte Geschwindigkeit überschreitet, und die Häufigkeit von Änderungen nicht zu analysieren, wenn die Fahrzeuggeschwindigkeit niedriger ist als die vorbestimmte Geschwindigkeit.

4. Vorrichtung nach einem der vorstehenden Ansprüche, wobei die Analyseschaltkreise in der Lage sind, als Reaktion auf das Signal, welches anzeigt, dass sich das Fahrzeug in der Auffahrsituation befindet, eine Signifikanz der Situation, in welcher zu dicht aufgefahren wird, zu schätzen, und ein Signal auszugeben, welches die geschätzte Signifikanz anzeigt.

5. Vorrichtung nach Anspruch 4, wobei die Analyseschaltkreise in der Lage sind, zumindest eines von einem Abstand des Fahrzeugs von einem vorherfahrenden Fahrzeug und einer Zeit bis zum Erreichen des vorherfahrenden Fahrzeugs in Abhängigkeit von der Häufigkeit von Änderungen in dem zumindest einen überwachten Signal zu schätzen, und ein Signal auszugeben, welches den zumindest einen geschätzten Abstand und die Zeit bis zur Kollision angibt.

6. Vorrichtung nach Anspruch 5, wenn abhängig von Anspruch 2, wobei die Analyseschaltkreise weiter konfiguriert sind, um den geschätzten Abstand mit der Fahrzeuggeschwindigkeit in Beziehung zu setzen und ein Signal auszugeben, wenn der geschätzte Abstand unter einen Schwellenwert fällt, wobei der Schwellenwert von der aktuellen Geschwindigkeit abhängig ist.

7. Vorrichtung nach einem der vorstehenden Ansprüche, weiter Steuerschaltkreise umfassend, welche in der Lage sind, ein Warnsignal zum Aktivieren einer Warnanzeige innerhalb des Fahrzeugs zu erzeugen, um einen Fahrer als Reaktion auf eines von einer Signalausgabe durch die Analyseschaltkreise und einem von einem Empfänger von einer dezentralen Analysevorrichtung empfangenen Signal zu warnen.

8. Vorrichtung nach einem der vorstehenden Ansprüche, wobei die Vorrichtung Übertragungsschaltkreise umfasst, welche in der Lage sind, als Reaktion auf eine Signalausgabe durch die Analyseschaltkreise über eine drahtlose Kommunikation eine Warnanzeige an eine Fahrerrückmeldevorrichtung zu übertragen.

9. Vorrichtung nach einem der vorstehenden Ansprüche, weiter Steuerschaltkreise umfassend, welche in der Lage sind, ein Bremsensteuersignal zu erzeugen, um als Reaktion auf ein von den Analyseschaltkreisen ausgegebenes Signal die Bremsen automatisch zu aktivieren.

10. Vorrichtung nach einem der vorstehenden Ansprüche, wobei die Vorrichtung weiter Übertragungsschaltkreise umfasst, welche in der Lage sind, Daten, welche zumindest eines von zumindest einem Abschnitt der durch die Überwachungsschaltkreise ausgegebenen Signale und zumindest einem Teilsatz der durch die Analyseschaltkreise ausgegebenen Signale anzeigen, an eine dezentrale Analysevorrichtung (20) zu übertragen, welche sich außerhalb des Fahrzeugs befindet.

11. Vorrichtung nach Anspruch 10, wobei die Vorrichtung konfiguriert ist, als Reaktion auf das durch die Analyseschaltkreise erzeugte Signal, welches anzeigt, dass sich das Fahrzeug in der Auffahrsituation befindet, Daten aus nach vorne abtastenden Vorrichtungen zu sammeln, welche auf dem Fahrzeug montiert sind, wobei die Übertragungsschaltkreise in der Lage sind, die von den nach vorne abtastenden Vorrichtungen gesammelten Daten an die dezentrale Analysevorrichtung zu übertragen.

12. Vorrichtung nach einem der vorstehenden Ansprüche, wobei die Vorrichtung weiter umfasst:
eine Schnittstelle, welche konfiguriert ist, sich mit einer Diagnoseschnittstelle auf dem Fahrzeug zu verbinden und die zu überwachenden Signale von der Diagnoseschnittstelle zu empfangen.

13. Verfahren zum Erkennen von Fahrzeugfahreigenschaften, welche eine Auffahrsituation anzeigen, wobei das Verfahren umfasst:
Überwachen zumindest eines Signals, welches zumindest eines von Gaspedalposition und Bremspedalposition anzeigt;
Analysieren einer Häufigkeit von Änderungen in dem zumindest einen überwachten Signal; und
Erzeugen eines Signals, welches anzeigt, dass das Fahrzeug sich in einer Auffahrsituation befindet, als Reaktion darauf, dass das Bestimmen der Häufigkeit von Änderungen zumindest einen Schwellenwert erreicht oder überschreitet.

14. Verfahren zum Analysieren von Daten, welche von einer Vielzahl von Fahrzeugen empfangen wurden, wobei die Daten zumindest eines von Gaspedalposition und Bremspedalposition anzeigen, wobei das Verfahren umfasst:
für jedes Fahrzeug Analysieren des zumindest einen von Gaspedalposition und Bremspedalposition und Bestimmen, wenn eine Häufigkeit von Änderungen in dem zumindest einen von der Gaspedalposition und der Bremspedalposition zumindest einen Schwellenwert erreicht oder überschreitet; und
als Reaktion darauf, dass der Analyseschritt bestimmt, dass der zumindest eine Schwellenwert erreicht oder überschritten wird, Ausgeben von Informationen, welche anzeigen, dass bestimmt wurde, dass das Fahrzeug sich in einer Auffahrsituation befindet.

15. Computerprogramm, welches, wenn durch einen Computer ausgeführt, in der Lage, den Computer zu steuern, um ein Verfahren nach Anspruch 13 oder 14 durchzuführen.

## Revendications

1. Dispositif (10) pour détecter des caractéristiques de conduite de véhicule indicatives d'une situation de talonnage, ledit dispositif comprenant :
des circuits de contrôle pour contrôler au moins un signal indicatif d'au moins une d'une position de pédale d'accélérateur et d'une position de pédale de frein ;
des circuits d'analyse pouvant être mis en œuvre pour déterminer une fréquence de changements dudit au moins un signal contrôlé et pour produire un signal indicatif dudit véhicule étant dans une situation de talonnage en réponse à la détermination de ladite fréquence de changements atteignant ou dépassant au moins une valeur de seuil.

2. Dispositif selon la revendication 1, dans lequel lesdits circuits de contrôle peuvent être mis en œuvre pour contrôler ladite vitesse de véhicule et pour fournir ladite vitesse de véhicule auxdits circuits d'analyse.

3. Dispositif selon la revendication 2, dans lequel lesdits circuits d'analyse peuvent être mis en œuvre pour déterminer ladite fréquence de changements dudit au moins un signal contrôlé en réponse à ladite vitesse de véhicule dépassant une vitesse prédéterminée et pour ne pas analyser ladite fréquence de changements lorsque ladite vitesse de véhicule est inférieure à ladite vitesse prédéterminée.

4. Dispositif selon l'une quelconque des revendications précédentes, dans lequel lesdits circuits d'analyse peuvent être mis en œuvre en réponse audit signal indiquant que ledit véhicule est dans ladite situation de talonnage pour évaluer une gravité de ladite situation de talonnage et pour fournir un signal indicatif de ladite gravité évaluée.

5. Dispositif selon la revendication 4, dans lequel lesdits circuits d'analyse peuvent être mis en œuvre pour évaluer au moins une d'une distance dudit véhicule à un véhicule précédent et d'un temps pour atteindre ledit véhicule précédent en fonction de ladite fréquence de changements dudit au moins un signal contrôlé et pour fournir un signal indicatif de ladite au moins une d'une distance évaluée et d'un temps jusqu'à la collision.

6. Dispositif selon la revendication 5 lorsque dépendante de la revendication 2, dans lequel lesdits circuits d'analyse sont en outre configurés pour corréler ladite distance évaluée à ladite vitesse de véhicule et pour fournir un signal lorsque ladite distance évaluée passe au-dessous d'une valeur de seuil, ladite valeur de seuil étant dépendante de ladite vitesse actuelle.

7. Dispositif selon l'une quelconque des revendications précédentes, comprenant en outre des circuits de contrôle pouvant être mis en œuvre pour produire un signal d'avertissement pour activer un indicateur d'avertissement à l'intérieur dudit véhicule pour avertir un conducteur en réponse à un d'un signal fourni par lesdits circuits d'analyse et d'un signal reçu au niveau d'un récepteur en provenance d'un dispositif analyseur distant.

8. Dispositif selon l'une quelconque des revendications précédentes, ledit dispositif comprenant des circuits de transmission pouvant être mis en œuvre pour transmettre par une communication sans fil un indicateur d'avertissement à un dispositif de rétroaction de conducteur en réponse à un signal fourni par lesdits circuits d'analyse.

9. Dispositif selon l'une quelconque des revendications précédentes, comprenant en outre des circuits de commande pouvant être mis en œuvre pour produire un signal de commande de frein pour appliquer automatiquement les freins en réponse à un signal fourni par lesdits circuits d'analyse.

10. Dispositif selon l'une quelconque des revendications précédentes, dans lequel ledit dispositif comprend en outre des circuits de transmission pouvant être mis en œuvre pour transmettre des données indicatives d'au moins un de : au moins une portion desdits signaux fournis par lesdits circuits de commande et au moins un sous-ensemble desdits signaux fournis par lesdits circuits d'analyse vers un dispositif d'analyse distant (20) qui est distant dudit véhicule.

11. Dispositif selon la revendication 10, ledit dispositif étant configuré en réponse audit signal produit par lesdits circuits d'analyse indiquant que ledit véhicule est dans ladite situation de talonnage pour collecter des données provenant de dispositifs de détection avant montés sur ledit véhicule, lesdits circuits de transmission pouvant être mis en œuvre pour transmettre lesdites données collectées provenant desdits dispositifs de détection avant audit dispositif d'analyse distant.

12. Dispositif selon l'une quelconque des revendications précédentes, ledit dispositif comprenant en outre :
une interface configurée pour connexion à une interface de diagnostic sur ledit véhicule et pour recevoir lesdits signaux à contrôler en provenance de ladite interface de diagnostic.

13. Procédé pour détecter des caractéristiques de conduite de véhicule indicatives d'une situation de talonnage, ledit procédé comprenant :
le contrôle d'au moins un signal indicatif d'au moins une d'une position de pédale d'accélérateur et d'une position de pédale de frein ;
l'analyse d'une fréquence de changements dudit au moins un signal contrôlé ; et
la production d'un signal indicatif dudit véhicule étant dans une situation de talonnage en réponse à la détermination de ladite fréquence de changements atteignant ou dépassant au moins une valeur de seuil.

14. Procédé d'analyse de données reçues en provenance d'une pluralité de véhicules, lesdites données étant indicatives d'au moins une d'une position de pédale d'accélérateur et d'une position de pédale de frein, ledit procédé comprenant :
pour chaque véhicule l'analyse de ladite au moins une de position de pédale d'accélérateur et de position de pédale de frein et la détermination si une fréquence de changements de ladite au moins une de ladite position de pédale d'accélérateur et de ladite position de pédale de frein atteint ou dépasse au moins une valeur de seuil ; et
en réponse à ladite étape d'analyse la détermination de ladite au moins une valeur de seuil étant atteinte ou dépassée, la fourniture d'informations indiquant que ledit véhicule a été détecté comme étant dans une situation de talonnage.

15. Programme informatique qui lorsqu'il est exécuté par un ordinateur peut être mis en œuvre pour commander ledit ordinateur pour effectuer un procédé selon les revendications 13 ou 14.
